# EUROPEAN PATENT SPECIFICATION

(11) **EP 2 769 624 B1**
(45) Date of publication and mention of the grant of the patent: **28.03.2018**
(21) Application number: 14154108.6
(22) Date of filing: 06.02.2014
(51) Int. Cl.: A23C 20/02, A23D 7/005, A23L 2/385, A23L 2/52, A23D 7/02, A23L 29/231, A23L 29/256, A23L 11/00, A23L 33/105

(54) **Composition comprising a soy extract**
Zusammensetzung mit einem Soja-Extrakt
Composition comprenant un extrait de soja

(30) Priority: 21.02.2013 IT MI20130243
(43) Date of publication of application: 27.08.2014
(73) Proprietor: Valsoia S.p.A, 40138 Bologna (BO) (IT)
(72) Inventor: MARANGONI, Matteo, 40138 Bologna (BO) (IT); DONATIELLO, Rolando, 40138 Bologna (BO) (IT)
(74) Representative: Perani & Partners S.p.A.

(56) References cited:
- DE-A1- 2 347 219
- US-A- 3 857 970
- US-A- 3 982 025
- US-A- 4 678 673
- US-A1- 2010 047 389
- DATABASE GNPD [Online] MINTEL; March 2009 (2009-03), "Organic Spread", XP002715604, Database accession no. 1074614

## Description

The present invention relates to a composition comprising concentrated soy extract, a process for its production and a food preparation comprising said composition.

Soy-based foods have generally recognized health benefits related to their low saturated fat content and high content of unsaturated fatty acids, which may bring benefits to the cardiovascular system. In addition, food preparations derived from soybeans are an excellent source of non-animal protein and, being gluten-free, they are compatible with the diet for people with celiac disease.

Soy milk (or soymilk, i.e. a beverage generally obtained by soaking dry soybeans and grinding them with water), in addition to being naturally cholesterol-free, contains proteins which lower the total cholesterol level, reduce LDL and increase "good" HDL lipoproteins. In addition, soy milk is an excellent source of lecithin and vitamin E, it can be consumed by people who are intolerant to lactose or allergic to cow's milk, and has a high content of isoflavones, that are known to reduce blood cholesterol levels.

Tofu or " soy cheese " is produced from soy milk, which, once curdled, becomes a preparation similar to cheese. Tofu can be used as soft, fried or hard.

However, tofu-based food compositions are not known, which have a consistency suitable to allow the use as spreadable products, for example on bread or other foods.

Furthermore, the solid preparations, or semisolid, type cheese soy generally available and obtainable on an industrial scale have a poorly palatable consistency, especially for western consumers, and are much less tasty compared to similar preparations of milk. To make these products more attractive, it may be necessary to add additives, which can alter the taste and appearance of the final product and may be of synthetic origin. However, to avoid possible intolerances and limit the cost of the preparation, it is preferable to avoid or to minimize the addition of said additives.

US patent number 3,982,025 describes a soy cheese spread having excellent spreadability, oral melting and flavour characteristics made by admixing a soy cheese, prepared by fermenting soy milk with lactic acid-forming cheese starter culture to forma curd, with an edible oil or fat, a cheese emulsifying melting salt, and water and then vigorously agitating this mixture at an elevated temperature to liquefy and homogeneously emulsify the ingredients and thereby form a product having a past-like consistency.

One purpose of the present invention is to provide a food preparation based on soybean that is palatable and ready to be used also in spreadable form.

A task of the present invention is to provide a method for the preparation of said composition, which is reproducible, inexpensive and suitable for the preparation on a large scale.

In accordance with the present invention, these purposes, and others that will be better apparent hereinafter, are achieved by a solid or semisolid composition comprising a concentrated and fermented soy extract, pectin, vegetable fats, carrageenan and sodium alginate, obtainable by a method comprising the steps of:
i. preparing an aqueous extract of soybeans with a protein content of at least 2.5% by weight / total weight of the extract;
ii. concentrating the extract of step i. so as to obtain a composition with a protein content between 3.5 and 5.5% by weight / total weight of the extract of step i;
iii. adding to the mixture obtained in step ii. pectin in a quantity comprised between 0.5 and 1.5 % of the weight of the composition;
iv. heating the mixture obtained in step iii. at a temperature between 80 and 90°C for 5 to 20 minutes;
v. cooling the mixture of step iv. to a temperature comprised between 20 and 45°C and inoculating it with lactic ferments of at least one bacterium;
vi. allowing the fermentation to proceed until a pH between 4.00 to 4.50, then breaking the clot to obtain a fermented mixture;
vii. dissolving vegetable fats at a temperature between 40 and 60°C in a separate vessel;
viii. adding the melted vegetable fat of the passage vii. to the fermented mixture of the passage vi. under vigorous mixing;
ix. adding carrageenan and sodium alginate;
x. pasteurizing the mixture of step ix. at 70 to 85°C for a time between 10 and 25 minutes;
xi. homogenizing the mixture of step x under a pressure of 100 to 200 bar.

These objects have also been achieved by a food preparation comprising said composition.

The present invention further relates to the aforementioned process for the production of said composition, i.e. a process that, we repeat again, comprises the steps of :
i. preparing an aqueous extract of soybeans with a protein content of at least 2.5% by weight / total weight of the extract;
ii. concentrating the extract of step i. so as to obtain a composition with a protein content between 3.5 and 5.5% by weight / total weight of the extract of step i;
iii. adding to the mixture obtained in step ii. pectin in a quantity comprised between 0.5 and 1.5 % of the weight of the composition;
iv. heating the mixture obtained in step iii. at a temperature between 80 and 90°C for 5 to 20 minutes;
v. cooling the mixture of step iv. to a temperature comprised between 20 and 45°C and inoculating it with lactic ferments of at least one bacterium;
vi. allowing the fermentation to proceed until a pH between 4.00 to 4.50, then breaking the clot to obtain a fermented mixture;
vii. dissolving vegetable fats at a temperature between 40 and 60°C in a separate vessel;
viii. adding the melted vegetable fat of the passage vii. to the fermented mixture of the passage vi. under vigorous mixing;
ix. adding carrageenan and sodium alginate;
x. pasteurizing the mixture of step ix. at 70 to 85°C for a time between 10 and 25 minutes;
xi. homogenizing the mixture of step x under a pressure of 100 to 200 bar.

In the context of the present invention, the term "semi-solid composition" means a composition having a consistency similar to that of spreadable cream cheese or of a food cream, such as mayonnaise.

In the context of the present invention, the term "concentrated soy extract" means an extract of soy, containing soy proteins, that has been concentrated to the desired value, for example by ultrafiltration or by heating at atmospheric or reduced pressure.

For example, the soy extract can be obtained by soaking dry soybeans and grinding them with water, optionally with the addition of sugar (raw cane sugar), salt (potassium or sodium chloride), emulsifiers (fatty acids mono-diglycerids) and natural flavours. The content of proteins deriving from soy or other vegetable sources in the soy extract can be 7,5%, 2,5%, or less.

In the context of the present invention, "carrageenan" or "carrageenan jelly" refers to a substance that is widely use in food, medicine and industrial preparations, which is obtained by boiling red algae of the rocky coast of the North Atlantic and consists chiefly of calcium salts, potassium, sodium and magnesium of polysaccharide sulphate esters which, on hydrolysis, yield galactose and 3,6- anhydrogalactose. Carrageenan is denoted by the symbol E 407 in food labelling (Directive 95/2/EC of the European Parliament and Council of 20 February 1995).

In the context of the present invention, "sodium alginate" refers to a chemical compound consisting of the sodium salt of alginic acid, having formula NaC₆H₇O₆ and indicated in the food industry as E401 (European Parliament and of Council Directive 95/2/EC of 20 February 1995).

Unless otherwise specified, in the context of the present invention the percentages are referred to the weight of a component over the total weight of the composition.

As used herein, the terms "comprises" and "comprising" are used to indicate that a composition may contain a substance in addition to other ingredients or that it may consist of (i.e. be made 100% of) that specific substance.

In one aspect, the present invention relates to a composition comprising a solid or semisolid concentrated and fermented soy extract, pectin, vegetable fats, carrageenan and sodium alginate, obtainable by the method according to the present invention.

It was found that the combination of a vegetable fat and a base of concentrated and fermented soy extract allows to obtain a composition which is stable in time at temperatures between 2 and 8°C, has the optimal density to produce prepared food spreads and has a palatable taste and texture, as ascertained in sampling tests conducted on average consumers. It was found that the composition according to the invention is stable and retains mainly intact the initial organoleptic characteristics after 3 months at 2-4°C.

Preferably, the composition according to the present invention further comprises potassium chloride (KCl).

Preferably, the extract of soy concentrate of the composition according to the invention is obtained by ultrafiltration or via concentration by heating. More preferably, the soy extract in the composition according to the invention was obtained by ultrafiltration. It has been found that the concentration by ultrafiltration results in a final product with better organoleptic characteristics, in particular with regard to taste and scent.

Preferably, the composition according to the invention comprises at least 120 mg of calcium per 100 g of total weight of the composition.

Preferably, the content of carrageenan is between 0.3 and 0.7 % by weight / total weight of the composition.

Preferably, the content of sodium alginate is between 0.2 and 0.5% by weight / total weight of the composition.

Preferably, the composition according to the invention comprises polydextrose, malt dextrin, inulin, fructo-oligosaccharides, tricalcium phosphate, vitamins, and sodium chloride.

The vitamins and tricalcium phosphate can be added to enrich the product in micronutrients, so as to provide additional nutritional benefits and health benefits.

The pH of the finished product is also important for the conservation of the product.

Therefore it may be advantageous to the addition of acidity such as tartaric acid or citric acid or lactic acid, or glucono delta-lactone, in percent amount sufficient to bring the pH below the desired value.

Preferably, the composition according to the invention comprises at least one acidity corrector selected from tartaric acid, citric acid, lactic acid or glucono delta-lactone.

Preferably, in the composition according to the invention the vegetable fats are at least one of coconut oil or palm oil, fractionated coconut oil, fractionated palm oil, and mixtures thereof.

Preferably, the composition according to the invention comprises the coconut oil in quantities between 10 and 25 % by weight / total weight of the composition and the soya extract is concentrated in a quantity between 75 and 85 % of the composition.

In another aspect, the present invention relates to a food preparation comprising said composition based on ultrafiltrated and fermented soy extract and coconut oil.

Preferably, the food composition according to the invention is in the form of a spreadable preparation.

In another aspect, the present invention relates to a process for the production of said composition based on extract of soy concentrate and fermented and vegetable fats comprising the steps of :
i. preparing an aqueous extract of soybeans with a protein content of at least 2.5% by weight / total weight of the extract;
ii. concentrating the extract of step i. so as to obtain a composition with a protein content between 3.5 and 5.5% by weight / total weight of the extract of step i;
iii. adding to the mixture obtained in step ii. pectin in a quantity comprised between 0.5 and 1.5 % of the weight of the composition;
iv. heating the mixture obtained in step iii. at a temperature between 80 and 90°C for 5 to 20 minutes;
v. cooling the mixture of step iv. to a temperature comprised between 20 and 45°C and inoculating it with lactic ferments of at least one bacterium;
vi. allowing the fermentation to proceed until a pH between 4.00 to 4.50, then breaking the clot to obtain a fermented mixture;
vii. dissolving vegetable fats at a temperature between 40 and 60°C in a separate vessel;
viii. adding the melted vegetable fat of the passage vii. to the fermented mixture of the passage vi. under vigorous mixing ;
ix. adding carrageenan and sodium alginate ;
x. pasteurizing the mixture of step ix. at 70 to 85°C for a time between 10 and 25 minutes ;
xi. homogenizing the mixture of step x under a pressure of 100 to 200 bar.

The protein content of the soybean extract used in step i. can be between 2.5 and 5 % by weight / total weight of the extract, preferably between 2.5 and 4.5, more preferably between 3 and 3.5.

The lactic acid bacteria used in the process of the present invention are all bacteria capable of converting lactose, dextrose, sucrose and other sugars into lactic acid by the lactic fermentation, and in particular those able to convert sucrose into lactic acid naturally present in soybeans or sucrose added during the procedure.

Non-limiting examples of bacteria used in the process of the present invention include *Streptococcus thermophilus, Lactobacillus bulgaricus* and mixtures thereof.

Preferably, the lactic ferments of the bacterium used in the process according to the invention include *Streptococcus thermophilus.*

The process according to the present invention allows obtaining, in a manner that is reproducible and easily applicable on industrial scale, a food preparation based on extract of fermented and ultrafiltered soybeans and coconut oil with the above-described advantages.

The passage viii. is carried out under vigorous stirring to allow complete mixing of the fermented vegetable fats with the preparation obtained in step vi. The complete mixing can be obtained through the operation of equipment and systems known to those skilled in the art and specifically applicable to the scale of the preparation and the nature of the facilities available. As non-limiting example, the mixing can be achieved either through a ribbon mixer or an agitator paddles with swivel arm, with an impeller or with a central shaft rotating at high speed or by putting the mass in recirculation passing by a centrifugal pump.

Preferably, in the process according to the invention, before the passage is mixed with extract of soybean of step i. a quantity of sucrose between 0.01 and 1 % by weight / weight of the extract of soy and / or an amount of pectin between 0.2 and 1 % by weight / weight of the extract of soybeans. The addition of sucrose may be advantageous to accelerate the fermentation process, also depending on the bacterial strain used.

Preferably, in step ii. the soy extract is concentrated by ultrafiltration or by heating.

As non-limiting example, ultrafiltration can be obtained using polysulfone membranes in two stages, with 100 kDa cut-off and trans membrane pressure of 2.5 bar.

As non-limiting example, the concentration can be obtained by thermal treatment, i.e. heating, of the product to about 90°C (90-95°C) and vacuum evaporation with a number of stages such as to obtain the desired protein value.

More preferably, the concentration of step ii. is carried out by ultrafiltration.

Preferably, the method according to the invention further comprises adding KCl (potassium chloride) prior to steps x and xi.

The method according to the present invention preferably comprises the step of packaging the composition obtained in step xi at or above 60°C. Advantageously, carrying out the packaging the final composition at a temperature of at least 60°C yields a final product with firm and palatable texture.

Preferably, after step xi the compostion according to the invention is cooled to 6-2°C, more preferably to 4°C, by flushing with cold air (4°C) in a forced convection tunnel.

Embodiments of the present invention are described in the following examples for illustrative and not limitative scope only.

### EXAMPLE 1

**Component - Weight composition in % by weight of ingredient on the weight of the final composition**

| | |
|---|---|
| Yosoi™ (Soybean extract comprising 3% by weight / weight proteins, without sugar or any other ingredients/excipients) + 0.6 % pectin | 77.05 |
| Coconut oil | 18.50 |
| Polydextrose | 3.00 |
| Sodium alginate | 0.35 |
| Carrageenan | 0.55 |
| Tricalcium phosphate | 0.30 |
| Sea salt | 0.25 |
| TOTAL | 100.00 |

### Process

### Production of soy extract.

Sucrose (0.5 % by weight / weight of the final composition) and pectin (0.5% by weight / weight of the final composition) are added to the soy extract.

The mixture thus obtained is subjected to ultrafiltration to obtain a composition with a protein content between 3.9 to 4.0 % by weight / weight of the final composition.

The mixture is transferred in a fermenter and pectin (0.1% weight / weight of the final composition) is added to.

The mixture undergoes heat treatment at 85°C for 10 minutes

The mixture thus obtained is inoculated with *Streptococcus thermophilus* ferments.

The mixture is left to ferment until a pH of 4.50 is obtained and the clot in the fermenter is broken.

The coconut oil is melted in a heating vessel at 40-50°C.

The melted coconut oil is added to the fermented extract in a tank under strong agitation or putting the mass in the tank under recirculation by means of a centrifugal pump.

The dry powder ingredients (polydextrose, carrageenan, sodium alginate, tricafos - tricalcium phosphate, sea salt) are then added to the mixture.

The mixture thus obtained is subjected to pasteurisation at 70 to 85°C for 10 - 25 minutes, followed by homogenization under a pressure of 100 to 200 bar, hot packaging (≥ 60°C) and cooling.

### EXAMPLE 2

| | |
|---|---|
| Yosoi (Soybean extract comprising 3% by weight / weight proteins without sugar or any other ingredients) + 0.8 % pectin | 83.25 |
| Coconut oil | 10.0 |
| Polydextrose | 5.00 |
| Sodium alginate | 0.5 |
| Carrageenan | 0.7 |
| Tricalcium phosphate | 0.30 |
| Sea salt | 0.25 |
| TOTAL | 100.00 |

Procedure: as reported for Example 1.

## Claims

1. A process for the production of a solid or semisolid composition comprising concentrated and fermented soy extract, pectin, vegetable fats, carrageenan and sodium alginate, comprising the steps of :
i. preparing an aqueous extract of soybeans with a protein content of at least 2.5% by weight / total weight of the extract;
ii. concentrating the extract of step i. so as to obtain a composition with a protein content between 3.5 and 5.5% by weight / total weight of the extract of step i;
iii. adding to the mixture obtained in step ii. pectin in a quantity comprised between 0.5 and 1.5 % of the weight of the composition;
iv. heating the mixture obtained in step iii. at a temperature between 80 and 90°C for 5 to 20 minutes;
v. cooling the mixture of step iv. to a temperature comprised between 20 and 45°C and inoculating it with lactic ferments of at least one bacterium;
vi. allowing the fermentation to proceed until a pH between 4.00 to 4.50, then breaking the clot to obtain a fermented mixture;
vii. dissolving vegetable fats at a temperature between 40 and 60°C in a separate vessel;
viii. adding the melted vegetable fat of the passage vii. to the fermented mixture of the passage vi. under vigorous mixing;
ix. adding carrageenan and sodium alginate;
x. pasteurizing the mixture of step ix. at 70 to 85°C for a time between 10 and 25 minutes;
xi. homogenizing the mixture of step x under a pressure of 100 to 200 bar.

2. The process according to claim 1 wherein after step i. 0.01 to 1 % of sucrose by weight / weight of the soy extract and / or 0.2 to 1 % of pectin by weight / weight of the soy extract are added to the soy extract.

3. The process according to claim 1 or 2 wherein the ferments of at least one lactic acid bacterium of step v. include enzymes of Streptococcus thermophilus, Lactobacillus bulgaricus, or mixtures thereof.

4. The process according to one of claims 1 - 3 wherein the extract of soybeans in step ii. is concentrated by ultrafiltration or by heating.

5. A solid or semisolid composition comprising concentrated and fermented soy extract, pectin, vegetable fats, carrageenan and sodium alginate, obtainable with the process according to anyone of claims 1-4.

6. The composition according to claim 5, wherein the concentrated soy extract has a protein content of from 3.5 to 5.5% on the total weight of said concentrated soy extract.

7. The composition according to anyone of claims 5 or 6 comprising at least 120 mg of calcium per 100 g of total weight of the composition.

8. The composition according to anyone of the preceding claims 5-7 in which the vegetable fats are at least one of coconut oil, palm oil, fractionated coconut oil, fractionated palm oil, and mixtures thereof.

9. The composition of claim 8 wherein the vegetable fat is coconut oil in amount from 10 to 25 % by weight / total weight of the composition and the soy extract is concentrated in a quantity between 75 and 85 % by weight / total weight of the composition.

10. The composition according to anyone of the preceding claims 5-9, comprising at least one of polydextrose, maltodextrin, inulin, fructo-oligosaccharides, tricalcium phosphate, vitamins, and sodium chloride.

11. The composition according to anyone of the preceding claims 5-10 comprising at least one acidity corrector selected from tartaric acid, citric acid, lactic acid or glucono delta-lactone.

12. A food preparation comprising the composition according to anyone of the preceding claims.

13. The food preparation according to claim 12 in the form of a spreadable preparation.

## Patentansprüche

1. Verfahren zur Herstellung einer konzentrierten und fermentierten Sojaextrakt, Pektin, pflanzliche Fette, Carrageenan und Natriumalginat umfassenden, festen oder halbfesten Zusammensetzung, wobei das Verfahren die folgenden Schritte umfasst:
i. Herstellung eines wässrigen Sojabohnenextrakts mit einem Proteingehalt von mindestens 2,5% Gewicht/Gesamtgewicht des Extrakts;
ii. Konzentration des in Schritt i. erhaltenen Extrakts, um eine Zusammensetzung mit einem Proteingehalt zwischen 3,5 und 5,5% Gewicht/Gesamtgewicht des in Schritt i. erhaltenen Extrakts zu erhalten;
iii. Zugabe von Pektin in einer Menge zwischen 0,5 und 1,5% des Gewichts der Zusammensetzung zu der in Schritt ii. erhaltenen Mischung;
iv. Erhitzung der in Schritt iii. erhaltenen Mischung auf eine Temperatur zwischen 80 und 90°C für 5 bis 20 Minuten;
v. Abkühlung der in Schritt iv. erhaltenen Mischung auf eine Temperatur zwischen 20 und 45°C und Inokulation der genannten Mischung mit Milchfermenten von mindestens einem Bakterium;
vi. Gärung bis zu einem pH zwischen 4,00 und 4,50, dann Bruch des Gerinnsels, um eine fermentierte Mischung zu erhalten;
vii. Lösung der Pflanzenfette bei einer Temperatur zwischen 40 und 60°C in einem separaten Gefäß;
viii. Zugabe des in Schritt vii. erhaltenen geschmolzenen Pflanzenfettes zur in Schritt
vi. erhaltenen fermentierten Mischung unter kräftigem Mischen;
ix. Zugabe von Carrageenan und Natriumalginat;
x. Pasteurisierung der in Schritt ix. erhaltenen Mischung bei 70 bis 85°C für eine Zeit zwischen 10 und 25 Minuten;
xi. Homogenisierung der in Schritt x. erhaltenen Mischung unter einem Druck von 100 bis 200 bar.

2. Verfahren nach Anspruch 1, wobei 0,01 bis 1% Gewicht Saccharose/Gewicht des Sojaextrakts und/oder 0,2 bis 1% Gewicht Pektin/Gewicht des Sojaextrakts dem Sojaextrakt nach Schritt i. zugesetzt werden.

3. Verfahren nach Anspruch 1 oder 2, wobei die Fermente von mindestens einem in Schritt v. erhaltenen Milchsäurebakterium Enzyme von Streptococcus thermophilus, Lactobacillus bulgaricus oder Mischungen davon umfassen.

4. Verfahren nach einem der Ansprüche 1 bis 3, wobei der in Schritt ii. erhaltenen Extrakt von Sojabohnen durch Ultrafiltration oder durch Erhitzung konzentriert wird.

5. Eine konzentrierten und fermentierten Sojaextrakt, Pektin, Pflanzenfette, Carrageenan und Natriumalginat umfassende feste oder halbfeste Zusammensetzung, die mit dem Verfahren nach einem der Ansprüche 1 bis 4 erhältlich ist.

6. Zusammensetzung nach Anspruch 5, wobei der konzentrierte Sojaextrakt einen Proteingehalt von 3,5 bis 5,5% des Gesamtgewichts des konzentrierten Sojaextrakts aufweist.

7. Zusammensetzung nach einem der Ansprüche 5 oder 6, die mindestens 120 mg Calcium pro 100 g Gesamtgewicht der Zusammensetzung umfasst.

8. Zusammensetzung nach einem der vorhergehenden Ansprüche 5-7, wobei die Pflanzenfette mindestens eins von Kokosnussöl, Palmöl, fraktioniertem Kokosnussöl, fraktioniertem Palmöl und Mischungen davon sind.

9. Zusammensetzung nach Anspruch 8, wobei das Pflanzenfett Kokosnussöl in einer Menge von 10 bis 25% Gewicht/Gesamtgewicht der Zusammensetzung ist und der Sojaextrakt in einer Menge zwischen 75 und 85% Gewicht/Gesamtgewicht der Zusammensetzung konzentriert ist.

10. Zusammensetzung nach einem der vorhergehenden Ansprüche 5-9, die mindestens eins von Polydextrose, Maltodextrin, Inulin, Fructo-Oligosacchariden, Tricalciumphosphat, Vitaminen und Natriumchlorid umfasst.

11. Zusammensetzung nach einem der vorhergehenden Ansprüche 5 bis 10, die mindestens einen aus Weinsäure, Zitronensäure, Milchsäure oder Glucono-deltalacton ausgewählten Aciditätskorrektor, umfasst.

12. Lebensmittelzubereitung, die die Zusammensetzung nach einem der vorhergehenden Ansprüche umfasst.

13. Lebensmittelzubereitung nach Anspruch 12 in Form einer streichfähigen Zubereitung.

## Revendications

1. Procédé pour la production d'une composition solide ou semi-solide comprenant de l'extrait de soja concentré, fermenté, de la pectine, des graisses végétales, du carraghénane et de l'alginate de sodium, comprenant les étapes suivantes :
i. préparer un extrait aqueux de soja ayant une teneur en protéines d'au moins 2,5% en poids/poids total de l'extrait ;
ii. concentrer l'extrait de l'étape i. de manière à obtenir une composition ayant une teneur en protéines comprise entre 3,5 et 5,5% en poids/poids total de l'extrait de l'étape i ;
iii. ajouter au mélange obtenu à l'étape ii. pectine en une quantité comprise entre 0,5 et 1,5% du poids de la composition ;
iv. chauffer le mélange obtenu à l'étape iii. à une température comprise entre 80 et 90°C pendant 5 à 20 minutes ;
v. refroidir le mélange de l'étape iv. à une température comprise entre 20 et 45°C et l'inoculer avec des ferments lactiques d'au moins une bactérie ;
vi. laisser la fermentation se poursuivre jusqu'à un pH compris entre 4,00 et 4,50, puis casser le caillot pour obtenir un mélange fermenté ;
vii. dissoudre les graisses végétales à une température comprise entre 40 et 60°C dans un récipient séparé ;
viii. ajouter la graisse végétale fondue du passage vii. au mélange fermenté du passage vi. sous agitation vigoureuse ;
ix. ajouter du carraghénane et de l'alginate de sodium ;
x. pasteuriser le mélange de l'étape ix. entre 70 et 85°C pour un temps compris entre 10 et 25 minutes ;
xi. homogénéiser le mélange de l'étape x. sous une pression de 100 à 200 bars.

2. Procédé selon la revendication 1, dans lequel après l'étape i. 0,01 à 1% de saccharose en poids/poids de l'extrait de soja et/ou 0,2 à 1% de pectine en poids/poids de l'extrait de soja sont ajoutés à l'extrait de soja.

3. Procédé selon la revendication 1 ou 2, dans lequel les ferments d'au moins une bactérie d'acide lactique de l'étape v. comprennent des enzymes de Streptococcus thermophilus, de Lactobacillus bulgaricus ou des mélanges de ceux-ci.

4. Procédé selon l'une des revendications 1 à 3, dans lequel l'extrait de soja à l'étape ii. est concentré par ultrafiltration ou par chauffage.

5. Composition solide ou semi-solide comprenant un extrait de soja concentré et fermenté, de la pectine, des graisses végétales, du carraghénane et de l'alginate de sodium, pouvant être obtenu avec le procédé selon l'une quelconque des revendications 1 à 4.

6. Composition selon la revendication 5, dans laquelle l'extrait de soja concentré a une teneur en protéines de 3,5 à 5,5% sur le poids total dudit extrait de soja concentré.

7. Composition selon l'une quelconque des revendications 5 ou 6 comprenant au moins 120 mg de calcium pour 100 g de poids total de la composition.

8. Composition selon l'une quelconque des revendications 5 à 7, dans laquelle les matières grasses végétales sont au moins l'une parmi l'huile de coco, l'huile de palme, l'huile de coco fractionnée, l'huile de palme fractionnée et leurs mélanges.

9. Composition selon la revendication 8, dans laquelle la graisse végétale est de l'huile de coco en quantité de 10 à 25% en poids/poids total de la composition et l'extrait de soja est concentré en une quantité comprise entre 75 et 85% en poids/poids total de la composition.

10. Composition selon l'une quelconque des revendications précédentes 5-9, comprenant au moins l'un parmi le polydextrose, la maltodextrine, l'inuline, les fructo-oligosaccharides, le phosphate tricalcique, les vitamines et le chlorure de sodium.

11. Composition selon l'une quelconque des revendications précédentes 5-10, comprenant au moins un correcteur d'acidité choisi parmi l'acide tartrique, l'acide citrique, l'acide lactique ou le glucono-delta-lactone.

12. Préparation alimentaire comprenant la composition selon l'une quelconque des revendications précédentes.

13. Préparation alimentaire selon la revendication 12 sous la forme d'une préparation à tartiner.
